# EUROPEAN PATENT APPLICATION

(11) **EP 4 572 075 A1**
(43) Date of publication of application: **18.06.2025**
(21) Application number: 23869756.9
(22) Date of filing: 20.06.2023
(51) Int. Cl.: H02J 4/00, H02M 1/10, H02M 1/32, H02M 1/42

(54) **MULTI-INPUT POWER SUPPLY CIRCUIT AND ELECTRONIC DEVICE**

(30) Priority: 28.09.2022 CN 202211190839
(71) Applicant: Huawei Digital Power Technologies Co., Ltd., Shenzhen, Guangdong 518043 (CN)
(72) Inventor: HUANG, Jinliang, Shenzhen, Guangdong 518043 (CN); ZHAO, Dongsheng, Shenzhen, Guangdong 518043 (CN); YU, Chunwei, Shenzhen, Guangdong 518043 (CN)
(74) Representative: Maiwald GmbH
(86) International application number: PCT/CN2023/101491
(87) International publication number: WO 2024/066508

(57) **Abstract**

This application provides a multi-input power supply circuit and an electronic device. A sampling circuit (104) of the multi-input power supply circuit (10) includes at least one resistor. The at least one resistor provides a voltage feedback signal for a control circuit (105) of the multi-input power supply circuit (10) based on input voltages of input interfaces (101) of the multi-input power supply circuit (10), and provides a function of isolation between the control circuit (105) and the input interfaces (101). The sampling circuit (104) of the multi-input power supply circuit (10) implements input voltage sampling and isolation. In addition, beneficial effect of low complexity of a circuit structure is implemented.

## Description

This application claims priority to Chinese Patent Application No. 202211190839.7, filed with the China National Intellectual Property Administration on September 28, 2022 and entitled "MULTI-INPUT POWER SUPPLY CIRCUIT AND ELECTRONIC DEVICE", which is incorporated herein by reference in its entirety.

### TECHNICAL FIELD

This application relates to the field of power supply technologies, and in particular, to a multi-input power supply circuit and an electronic device.

### BACKGROUND

An electronic device includes a power supply circuit and a load. The power supply circuit is configured to receive an input voltage provided by an external power supply, process the input voltage, and then provide an output voltage for the load, to drive the load to operate.

A multi-input power supply circuit is a power supply circuit that can simultaneously receive a plurality of input voltages. The multi-input power supply circuit receives the plurality of input voltages respectively through a plurality of input interfaces, and provides an output voltage for the load based on one of the input voltages. The multi-input power supply circuit further includes a sampling circuit and a control circuit. The sampling circuit includes isolators such as optocouplers, isolated power supplies that supply power to the isolators, and the like. The isolator may sample voltage values of the plurality of input voltages, and send feedback signals to the control circuit. The control circuit controls, based on the feedback signal, an input interface of one of the input voltages to be connected to the power conversion circuit, so that the power conversion circuit processes the input voltage and then provides an output voltage for the load.

However, in the conventional technology, complexity of a structure of the multi-input power supply circuit is high.

### SUMMARY

This application provides a multi-input power supply circuit and an electronic device, to resolve a technical problem of high complexity of a structure of a multi-input power supply circuit in the conventional technology.

A first aspect of this application provides a multi-input power supply circuit, including a plurality of input interfaces, a first switch, a power conversion circuit, a sampling circuit, and a control circuit. The sampling circuit includes at least one resistor. The at least one resistor is configured to: provide a voltage feedback signal for the control circuit based on voltage values of input voltages of the plurality of input interfaces; and provide a function of isolation between the control circuit and the input interfaces. The control circuit controls the first switch based on the voltage feedback signals. For example, the control circuit controls an input end of the first switch to be connected to an output end, so that the power conversion circuit provides an output voltage for a load based on the input voltages provided by the input interfaces. In the multi-input power supply circuit provided in this embodiment, the sampling circuit may implement functions of input voltage sampling and isolation by using the at least one resistor. Therefore, complexity of a circuit structure of the sampling circuit is low, thereby reducing the complexity and costs of the circuit structure of the multi-input power supply circuit. In addition, in the multi-input power supply circuit provided in this embodiment, the at least one resistor in the sampling circuit does not introduce more interference, and overall reliability of the multi-input power supply circuit can also be improved.

In an embodiment of the first aspect of this application, the sampling circuit specifically includes a plurality of sampling subcircuits, and each sampling subcircuit includes a plurality of resistors that are connected in series. An input end of the plurality of resistors that are connected in series may be configured to connect to a positive electrode or a negative electrode of one input interface, and an output end of the plurality of resistors that are connected in series is connected to the control circuit. The plurality of resistors may be configured to provide a voltage feedback signal for the control circuit based on a voltage value of the connected positive electrode or negative electrode. In the multi-input power supply circuit provided in this embodiment, the sampling circuit may implement the sampling and isolation functions by using the plurality of resistors that are connected in series. Even if the multi-input power supply circuit has more input interfaces, only a resistor needs to be added to the sampling circuit, thereby greatly reducing the complexity of the structure of the multi-input power supply circuit.

In an embodiment of the first aspect of this application, the multi-input power supply circuit is disposed between the control circuit and the plurality of sampling subcircuits; and may be configured to: amplify a voltage feedback signal provided by the sampling subcircuit, and provide an amplified voltage feedback signal for the control circuit. In the multi-input power supply circuit provided in this embodiment, the sampling circuit can provide, for the control circuit, a voltage feedback signal that is more suitable for processing by the control circuit, thereby improving processing efficiency and stability of the control circuit.

In an embodiment of the first aspect of this application, the multi-input power supply circuit further includes a second switch. The control circuit may control an input end, corresponding to an input interface, of the second switch to be connected to an output end of the second switch. In this way, the sampling circuit can provide, through the second switch, a voltage feedback signal for the control circuit based on an input voltage of the input interface, and the control circuit can determine a voltage value of the input voltage of the input interface based on the voltage feedback signal. Therefore, in the multi-input power supply circuit provided in this embodiment, only two sampling subcircuits need to be disposed, and the sampling subcircuits are controlled, by using the second switch, to be connected to different input interfaces. Even if the multi-input power supply circuit has more input interfaces, only an input end of the second switch needs to be added, thereby further reducing the complexity of the structure of the multi-input power supply circuit and further reducing the costs of the multi-input power supply circuit.

In an embodiment of the first aspect of this application, the sampling circuit specifically includes a plurality of variable resistors. The sampling circuit provides, by using the plurality of variable resistors, the voltage feedback signal for the control circuit based on the input voltages of the input interfaces, and provides the function of isolation between the control circuit and the input interfaces. In the multi-input power supply circuit provided in this embodiment, the sampling circuit also has the sampling and isolation functions, and the complexity of the structure of the circuit is further greatly reduced. Even if the multi-input power supply circuit has more input interfaces, only a variable resistor needs to be added to the sampling circuit. In addition, resistance values of the variable resistors may be adjusted based on input voltages of input ends of the variable resistors, thereby improving flexibility of the multi-input power supply circuit. Therefore, the multi-input power supply circuit can be used in more different scenarios such as a scenario of a variable input voltage, thereby enriching functions and application scenarios of the multi-input power supply circuit.

In an embodiment of the first aspect of this application, the control circuit may specifically respond to a case in which a voltage value of an input voltage of a first input interface in the plurality of input interfaces is within an operating voltage range required by the load, and then the control circuit controls a first input end, corresponding to the first input interface, of the first switch to be connected to an output end of the first switch. Therefore, an input voltage that is provided by a power supply and that meets an operating requirement of the load can be determined from input voltages provided by a plurality of power supplies, to supply power to the load, thereby ensuring stable operation of the load.

In an embodiment of the first aspect of this application, the control circuit may specifically respond to a case in which the voltage value of the input voltage of the first input interface in the plurality of input interfaces is not within the operating voltage range required by the load, and then the control circuit controls a second input end, corresponding to a second input interface, of the first switch to be connected to the output end of the first switch. Therefore, when the plurality of power supplies provides the input voltages, and an input voltage provided by one power supply cannot drive the load to operate normally, switching to an input voltage provided by another power supply can be performed in time, to supply power to the load, thereby ensuring continuous and stable operation of the load.

In an embodiment of the first aspect of this application, the control circuit may specifically respond to a case in which the voltage values of the input voltages of all the plurality of input interfaces in the plurality of input interfaces are not within the operating voltage range required by the load, and then the control circuit controls the plurality of input ends of the first switch to be all disconnected from the output end of the first switch. Therefore, when none of the input voltages provided by the plurality of power supplies can drive the load to operate normally, the first switch may be controlled to disconnect in time the input voltages provided by all the power supplies. This provides protection for the multi-input power supply circuit and the subsequent load, thereby improving safety of the multi-input power supply circuit.

In an embodiment of the first aspect of this application, the control circuit may respond to a case in which the voltage values of the input voltages of all the plurality of input interfaces in the plurality of input interfaces are not within the operating voltage range required by the load and a sum of voltage values of a plurality of target input interfaces in the plurality of input interfaces is within the required operating voltage range, and then the control circuit controls the input ends, corresponding to the plurality of target input interfaces, of the first switch to be connected in series, and then connects the plurality of target input interfaces to the output end of the first switch after the series connection. Therefore, the load can still operate continuously and normally when none of the input voltages provided by all the power supplies is within the operating voltage range.

In an embodiment of the first aspect of this application, the power conversion circuit of the multi-input power supply circuit specifically includes a power factor correction circuit and a direct current conversion circuit.

In an embodiment of the first aspect of this application, the control circuit may be integrated into the power factor correction circuit or the direct current conversion circuit, so that the multi-input power supply circuit has higher integration, thereby further reducing the complexity of the structure of the multi-input power supply circuit.

In an embodiment of the first aspect of this application, input voltages of the multi-input power supply circuit are alternating-current or direct-current. The multi-input power supply circuit provided in this embodiment is highly flexible, and can be used in different scenarios.

A second aspect of this application provides an electronic device, including a load and the multi-input power supply circuit according to any one of the embodiments of the first aspect of this application. The multi-input power supply circuit is connected to a plurality of power supplies; and may be configured to obtain an input voltage provided by any one of the plurality of power supplies, process the input voltage, and provide an output voltage for the load.

### BRIEF DESCRIPTION OF DRAWINGS

To describe technical solutions in embodiments of this application or in the conventional technology more clearly, the following briefly describes the accompanying drawings used in describing embodiments or the prior art. Apparently, the accompanying drawings in the following description show merely some embodiments of this application, and persons of ordinary skill in the art may still derive other drawings from these accompanying drawings without creative efforts.
FIG. 1 is a diagram of a structure of an electronic device according to an embodiment of this application;
FIG. 2 is a diagram of another structure of an electronic device according to an embodiment of this application;
FIG. 3 is a diagram of a structure of a multi-input power supply circuit according to an embodiment of this application;
FIG. 4 is a diagram of a structure of a multi-input power supply circuit according to an embodiment of this application;
FIG. 5 is a diagram of a structure of a multi-input power supply circuit according to an embodiment of this application; and
FIG. 6 is a diagram of a structure of a multi-input power supply circuit according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by persons of ordinary skill in the art based on embodiments of this application without creative efforts shall fall within the protection scope of this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of this application described herein can be implemented in orders other than the order illustrated or described herein. In addition, the terms "include", "have", and any other variants are intended to cover the non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

A connection relationship described in this application means a direct or an indirect connection. For example, that A is connected to B may be that A is directly connected to B, or that A is indirectly connected to B through one or more other electrical components. For example, that A is indirectly connected to B may be that A is directly connected to C, and C is directly connected to B. In this way, A is connected to B through C. It may be further understood that "A is connected to B" described in this application may be that A is directly connected to B, or may be that A is indirectly connected to B through one or more other electrical components.

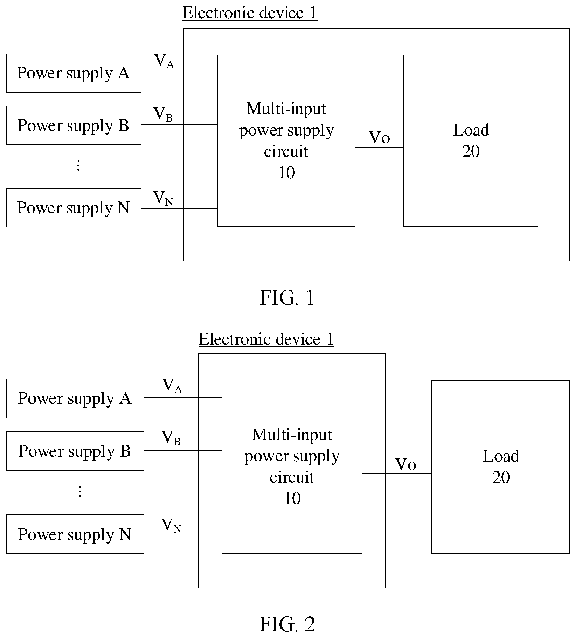

FIG. 1 is a diagram of a structure of an electronic device according to an embodiment of this application. The electronic device 1 shown in FIG. 1 includes a multi-input power supply circuit 10 and a load 20. The multi-input power supply 10 is configured to supply power to the load 20 in the electronic device 1. The electronic device shown in FIG. 1 may be an electrical device such as a network device, a mobile phone, a notebook computer, a computer case, a television, a smart tablet, an interactive tablet, an electric vehicle, a smart furniture device, a smartwatch, or a wearable device.

FIG. 2 is a diagram of another structure of an electronic device according to an embodiment of this application. The electronic device 1 shown in FIG. 2 includes a multi-input power supply circuit 10. The multi-input power supply circuit 10 is configured to supply power to a load 20 outside the electronic device 1. The electronic device 1 shown in FIG. 2 may be a power supply device such as a power adapter, a charger, a vehicle charging station, or a mobile power supply.

The multi-input power supply circuit 10 may be configured to receive input voltages provided by a plurality of power supplies. For example, in the examples shown in FIG. 1 and FIG. 2, the multi-input power supply circuit 10 may be configured to receive an input voltage V_{A} provided by a power supply A, an input voltage V_{B} provided by a power supply B, ..., an input voltage V_{N} provided by a power supply N, and the like. The multi-input power supply circuit 10 may perform processing such as power factor correction and voltage conversion on one of the input voltages provided by one power supply, and then provide an output voltage Vo for the load 20 to supply power to the load 20.

In an embodiment, an input voltage may be provided by an external power supply of the electronic device 1, or may be provided by an internal power supply of the electronic device 1.

Because the multi-input power supply circuit 10 can simultaneously receive the input voltages provided by the plurality of power supplies, when a power supply in the plurality of power supplies is faulty, the multi-input power supply circuit 10 can also continue to supply power to the load 20 based on an input voltage provided by another power supply that is not faulty. The multi-input power supply circuit 10 is highly reliable, and can ensure continuous and stable running of the load 20.

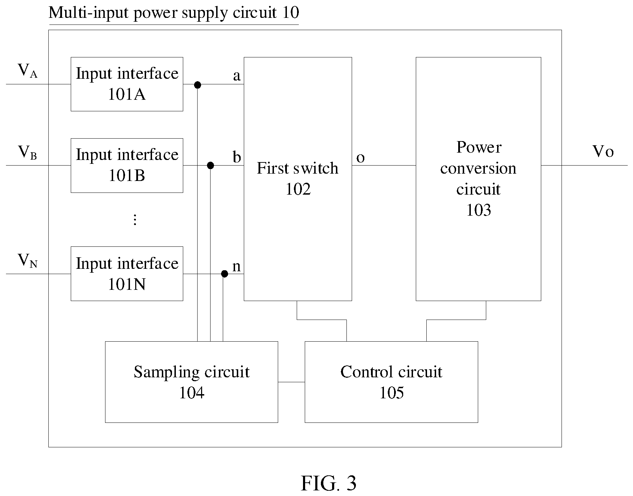

FIG. 3 is a diagram of a structure of a multi-input power supply circuit according to an embodiment of this application. FIG. 3 shows a specific implementation of the multi-input power supply circuit 10 shown in FIG. 1 and FIG. 2. The multi-input power supply circuit 10 includes a plurality of input interfaces 101, a first switch 102, a power conversion circuit 103, a sampling circuit 104, and a control circuit 105.

A plurality of input ends of the first switch 102 are respectively connected to the plurality of input interfaces 101. For example, an input end a of the first switch 102 provided in FIG. 3 is connected to an input interface 101A. The first switch 102 may receive, through the input interface 101A, an input voltage V_{A} provided by a power supply A. An input end b of the first switch 102 is connected to an input interface 101B. The first switch 102 may receive, through the input interface 101B, an input voltage V_{B} provided by a power supply B. The rest can be deduced by analogy. It should be noted that, in FIG. 3, that the first switch 102 has n input ends, and the n input ends may be configured to respectively connect to N input interfaces 101A to 101N is used as an example. A quantity of input ends of the first switch 102, a quantity of input interfaces 101 connected to the first switch 102, and a quantity of power supplies connected to the first switch 102 through the input interfaces 101 are not limited in this embodiment of this application.

In an embodiment, a plurality of input voltages of the multi-input power supply circuit 10 may be direct-current, and an output voltage of the multi-input power supply circuit may be direct-current. Alternatively, input voltages of the multi-input power supply circuit 10 may be alternating-current. When the input voltages of the multi-input power supply circuit 10 are alternating-current, the multi-input power supply circuit 10 may further perform voltage conversion on the alternating currents, and provide an output voltage Vo in a direct-current form.

An output end o of the first switch 102 is connected to an input end of the power conversion circuit 103. The first switch 102 may be configured to connect one input end to the output end o of the first switch 102. In this way, the power conversion circuit 103 can receive, through the output end o of the first switch 102 and an input interface 101 connected to the connected input end, an input voltage by using the first switch 102 and the input interface 101. For example, when the input end a of the first switch 102 is connected to the output end o of the first switch 102, the power conversion circuit 103 may receive, through the output end o of the first switch 102 and the input interface 101A connected to the input end a of the first switch 102, the input voltage V_{A} provided by the power supply A.

The power conversion circuit 103 may be configured to: perform processing such as power factor correction and voltage conversion on the input voltage, and then provide the output voltage Vo. In an embodiment, the power conversion circuit 103 includes a power factor correction (power factor correction, PFC) circuit and a direct current conversion (Direct Current-Direct Current, DC-DC) circuit. The power factor correction circuit is configured to adjust a power factor (power factor, PF) of an input voltage, and the direct current conversion circuit is configured to perform voltage conversion processing on the input voltage to obtain the output voltage Vo. A voltage value of the input voltage of the multi-input power supply circuit 10 is different from a voltage value of the output voltage Vo.

A plurality of input ends of the sampling circuit 104 are respectively connected to the plurality of output interfaces 101, and an output end of the sampling circuit 104 is connected to the control circuit 105. The sampling circuit 104 is configured to send voltage feedback signals to the control circuit 105 based on voltage values of input voltages of the plurality of input interfaces 101. The voltage feedback signals are used to indicate the voltage values of the plurality of input voltages of the multi-input power supply circuit 10.

The control circuit 105 is connected to the sampling circuit 104 and the first switch 102. The control circuit 105 may be configured to control the first switch 102. For example, the control circuit 105 may receive the voltage feedback signals sent by the sampling circuit 104, and control one input end of the first switch 102 to be connected to the output end o of the first switch 102 based on the voltage feedback signals.

In an embodiment, the control circuit 105 is further connected to the power conversion circuit 103. The control circuit 105 may be configured to control the power conversion circuit 103. For example, the control circuit 105 may be configured to control on/off of a switch transistor in the power conversion circuit 103, so that the power conversion circuit 103 performs processing such as voltage conversion on the input voltage received by the input end of the power conversion circuit 103, to obtain the output voltage Vo.

In an embodiment, the control circuit 105 may be a pulse-width modulation (Pulse-width modulation, PWM) controller, a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or the like.

In an embodiment, the control circuit 105 may be dedicated to controlling the first switch 102. Alternatively, the control circuit 105 may be integrated into the power factor correction circuit, and the control circuit 105 may be configured to control the first switch 102 and the power factor correction circuit. Alternatively, the control circuit 105 may be integrated into the direct current conversion circuit, and the control circuit 105 may be configured to control the first switch 102 and the direct current conversion circuit. Alternatively, the control circuit 105 may be integrated into the power conversion circuit 103, and the control circuit 105 may be configured to control the first switch 102 and the power conversion circuit 103.

In an embodiment, the voltage values of the input voltages of the input interfaces 101 of the multi-input power supply circuit 10 are relatively large, and a voltage value within a voltage range of a voltage signal that can be processed by the control circuit 105 is relatively small. Therefore, the sampling circuit 104 further has an isolation function, so that safety and reliability of the control circuit 105 and the multi-input power supply circuit 10 in which the control circuit 105 is located can be improved. For example, a voltage value of an input voltage received by the input end of the sampling circuit 104 is relatively large. In this case, the sampling circuit 104 may be configured to: perform voltage conversion processing on the input voltage to obtain a voltage feedback signal of a relatively small voltage value, and send the voltage feedback signal of the relatively small voltage value to the control circuit 105, so that the control circuit 105 can process the voltage feedback signal within a safe voltage range.

In the multi-input power supply circuit 10 provided in the conventional technology, the sampling circuit 104 includes isolators such as optocouplers, and further includes isolated power supplies that supply power to the isolators, and the like. The optocouplers in the sampling circuit 104 may implement both the following functions: a function of performing sampling processing on the input voltages of the input interfaces 101 to obtain the voltage feedback signals, and a function of isolation between the control circuit 105 and the input interfaces 101. However, when there is a large quantity of input interfaces 101 of the multi-input power supply circuit 10, a corresponding isolator and a corresponding isolated power supply need to be disposed in the sampling circuit 104 for each input interface 101. This greatly increases complexity of a structure of the multi-input power supply circuit 10 and increases costs of the multi-input power supply circuit 10. In addition, because a relatively large quantity of components such as the isolator and the isolated power supply are disposed in the multi-input power supply circuit 10, complexity of connection lines is high in specific implementation of the multi-input power supply circuit 10, and more interference is generated between the connection lines. In addition, the isolator of the sampling circuit 104 that is powered by the isolated power supply is an active device, and also generates more electromagnetic interference. As a result, overall reliability of the multi-input power supply circuit 10 is reduced.

Due to the foregoing technical problem of high circuit complexity of the multi-input power supply circuit 10 in the conventional technology, this application provides a multi-input power supply circuit 10, to reduce the complexity of the structure of the multi-input power supply circuit 10. The following describes the technical solutions of this application in detail by using specific embodiments. The following several specific embodiments may be combined with each other, and a same or similar concept or process may not be described repeatedly in some embodiments.

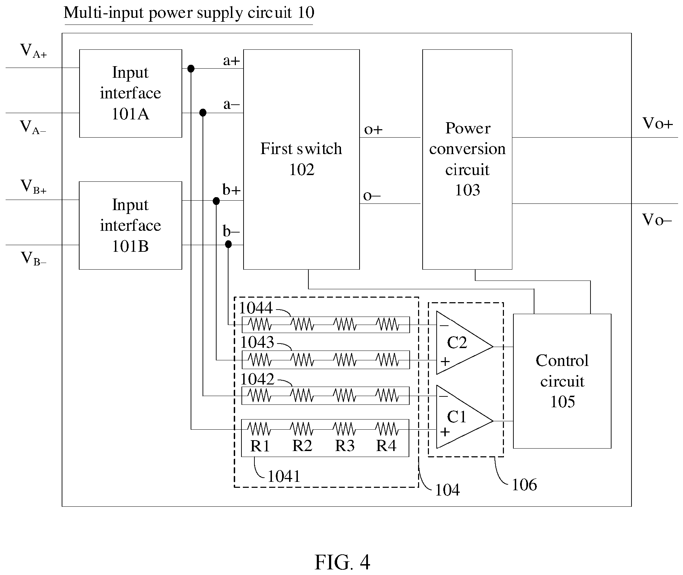

FIG. 4 is a diagram of a structure of a multi-input power supply circuit according to an embodiment of this application. The multi-input power supply circuit 10 shown in FIG. 4 includes a plurality of input interfaces 101, a first switch 102, a power conversion circuit 103, a sampling circuit 104, and a control circuit 105.

In FIG. 4, an example in which the multi-input power supply circuit 10 includes two input interfaces 101A and 101B is used. Two input ends of the input interface 101A are respectively configured to receive a positive voltage V_{A}+ and a negative voltage V_{A}- of an input voltage V_{A} provided by a power supply A. Two input ends of the input interface 101B are respectively configured to receive a positive voltage V_{B}+ and a negative voltage V_{B}- of an input voltage V_{B} provided by a power supply B.

An input end a+ and an input end a- of the first switch 102 are connected to the input interface 101A, and the first switch 102 may receive, through the input interface 101A, the input voltage V_{A} provided by the power supply A. An input end b+ and an input end b- of the first switch are connected to the input interface 101B, and the first switch 102 may receive, through the input interface 101B, the input voltage V_{B} provided by the power supply B. A positive output end o+ and a negative output end o- of the first switch 102 are respectively connected to input ends of the power conversion circuit 103.

The first switch 102 may be configured to connect the input end a+ to the positive output end o+, and connect the input end a- to the negative output end o-, so that the power conversion circuit 103 can receive the input voltage V_{A} through the first switch 102 and the input interface 101A. Alternatively, the first switch 102 may be configured to connect the input end b+ to the positive output end o+, and connect the input end b- to the negative output end o-, so that the power conversion circuit 103 can receive the input voltage V_{B} through the first switch 102 and the input interface 101B.

The power conversion circuit 103 may be configured to: perform processing such as power factor correction and voltage conversion on the received input voltage V_{A} or the input voltage V_{B}, and then provide an output voltage Vo.

In an embodiment, the sampling circuit 104 includes a plurality of sampling subcircuits. Each sampling subcircuit includes a plurality of resistors that are connected in series. An input end of the plurality of resistors that are connected in series is connected to a positive electrode or a negative electrode of an input interface 101, and an output end of the plurality of resistors is connected to the control circuit 105.

In an embodiment, the multi-input power supply circuit 10 further includes a plurality of operational amplifiers. A positive input end and a negative input end of each operational amplifier are respectively connected, through one sampling subcircuit, to a positive electrode and a negative electrode that correspond to a same input interface.

For example, in the embodiment shown in FIG. 4, the sampling circuit 104 includes four sampling subcircuits that are denoted as a first sampling subcircuit 1041, a second sampling subcircuit 1042, a third sampling subcircuit 1043, and a fourth sampling subcircuit 1044. The first sampling subcircuit 1041 includes four resistors R1 to R4 that are connected in series. In the first sampling subcircuit 1041, one end of a resistor R1 is used as an input end, and one end of a resistor R4 is used as an output end. The input end of the first sampling subcircuit 1041 is connected to the positive electrode V_{A}+ of the input interface 101A, and the output end of the first sampling subcircuit 1041 is connected to a positive electrode of a first operational amplifier C1. Correspondingly, an input end of the second sampling subcircuit 1042 is connected to the negative electrode V_{A}- of the input interface 101A, and an output end of the second sampling subcircuit 1042 is connected to a negative electrode of the first operational amplifier C1. An output end of the first operational amplifier C1 is connected to the control circuit 105. In addition, an input end of the third sampling subcircuit 1043 is connected to the positive electrode V_{B}+ of the input interface 101B, and an output end of the third sampling subcircuit 1043 is connected to a positive electrode of a first operational amplifier C2. An input end of the fourth sampling subcircuit 1044 is connected to the negative electrode V_{B}- of the input interface 101B, and an output end of the fourth sampling subcircuit 1044 is connected to a negative electrode of the second operational amplifier C2. An output end of the second operational amplifier C2 is connected to the control circuit 105.

The positive voltage V_{A}+ of the input end of the first sampling subcircuit 1041 is divided by the four resistors R1 to R4 to obtain a first voltage feedback signal, and the input end of the first sampling subcircuit 1041 outputs the first voltage feedback signal to the positive electrode of the first operational amplifier C1. The negative voltage V_{A}- of the input end of the second sampling subcircuit 1042 is divided by four resistors R1 to R4 to obtain a second voltage feedback signal, and the input end of the second sampling subcircuit 1042 outputs the second voltage feedback signal to the negative electrode of the first operational amplifier C1. The first operational amplifier C1 provides, based on the first voltage feedback signal and the second voltage feedback signal, an amplified voltage feedback signal of the input voltage V_{A} for the control circuit 105. The voltage feedback signal is used to indicate a voltage value of the input voltage V_{A} provided by the power supply A. Similarly, the second operational amplifier C2 provides an amplified voltage feedback signal of the input voltage V_{B} for the control circuit 105. The voltage feedback signal indicates a voltage value of the input voltage V_{B} provided by the power supply B.

The control circuit 105 may determine the voltage value of the input voltage V_{A} based on the received voltage feedback signal of the input voltage V_{A}, and determine the voltage value of the input voltage V_{B} based on the received voltage feedback signal of the input voltage V_{B}. The control circuit 105 may control the first switch 102 based on the voltage value of the input voltage V_{A} and the voltage value of the input voltage V_{B}. Alternatively, the control circuit may control the power conversion circuit 103 and the like based on the voltage value of the input voltage V_{A} and the voltage value of the input voltage V_{B}.

In addition, after the input voltage received by the input end of the plurality of resistors that are connected in series in the sampling circuit 104 is divided, the voltage value of the voltage feedback signal provided by the output end of the plurality of resistors that are connected in series is different from the voltage value of the input voltage. Therefore, the plurality of resistors that are connected in series in the sampling circuit 104 can further provide the function of isolation between the control circuit 105 and the input interfaces 101. In a specific implementation process, parameters such as a specific quantity of the plurality of resistors that are connected in series in the sampling circuit 104 and resistance values of these resistors may be correspondingly set based on a voltage value of the input end and a voltage value of the output end of the plurality of resistors, so that the plurality of resistors can meet a voltage isolation requirement. For example, when the voltage value of the input voltage of the input end of the plurality of resistors is relatively large, more resistors that are connected in series may be disposed; when the voltage value of the input voltage of the input end of the plurality resistors is relatively small, fewer resistors that are connected in series may be disposed; or the like. This ensures that the voltage value of the voltage feedback signal provided by the output end of the plurality of resistors can meet a voltage range of a signal that can be processed by the control circuit 105.

It should be noted that in the example shown in FIG. 4, that the multi-input power supply circuit 10 has two input interfaces is used as an example. When the multi-input power supply circuit 10 has another quantity of input interfaces, sampling subcircuits are correspondingly disposed in the sampling circuit, and a quantity of sampling subcircuits is twice the quantity of input interfaces. The control circuit 105 may separately determine voltage values of a plurality of input voltages based on voltage feedback signals corresponding to the plurality of input voltages.

In conclusion, in the multi-input power supply circuit 10 provided in this embodiment, the sampling circuit 104 includes a plurality of resistors that are connected in series. The plurality of resistors that are connected in series may provide voltage feedback signals for the control circuit 105 based on the input voltages of the input interfaces 101, and provide the function of isolation between the control circuit 105 and the input interfaces 101. In the sampling circuit 104 provided in this embodiment, a sampling function and an isolation function can be both implemented by using only a plurality of resistors that are connected in series. This greatly reduces complexity of a circuit structure of the sampling circuit 104 while the sampling function and the isolation function are implemented. Even if the multi-input power supply circuit 10 has more input interfaces 101, only a resistor needs to be added to the sampling circuit 104. Therefore, the complexity and costs of the structure of the multi-input power supply circuit 10 provided in this embodiment are low. In addition, resistors used for sampling and isolation in the multi-input power supply circuit 10 are all passive devices, and complexity of connection lines used when the resistors are disposed is low. Because interference generated by the plurality of resistors that are connected in series is small, overall reliability of the multi-input power supply circuit 10 can also be improved.

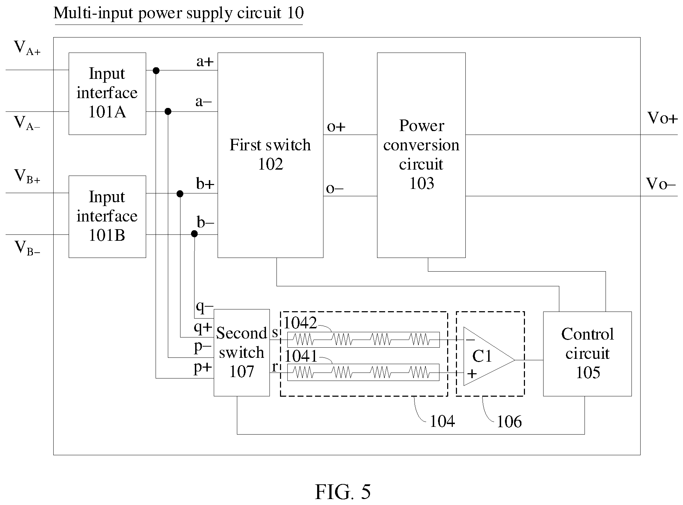

FIG. 5 is a diagram of a structure of a multi-input power supply circuit according to an embodiment of this application. The multi-input power supply circuit shown in FIG. 5 includes a plurality of input interfaces 101, a first switch 102, a second switch 107, a power conversion circuit 103, a sampling circuit 104, and a control circuit 105. Specific implementations of the plurality of input interfaces 101, the first switch 102, and the power conversion circuit 103 are the same as those shown in FIG. 4. Details are not described again.

The sampling circuit 104 shown in FIG. 5 includes a first sampling subcircuit 1041 and a second sampling subcircuit 1042. Each sampling subcircuit includes four resistors that are connected in series.

The second switch 107 includes four input ends. An input end p+ is connected to a positive electrode V_{A}+ of an input interface 101A, an input end p- is connected to a negative electrode V_{A}- of the input interface 101A, an input end q+ is connected to a positive electrode V_{B}+ of an input interface 101B, and an input end q- is connected to a negative electrode V_{B}- of the input interface 101B. The second switch 107 includes two output ends. An output end r is connected to an input end of the first sampling subcircuit 1041, and an output end s is connected to an input end of the second sampling subcircuit 1042. An output end of the first sampling subcircuit 1041 is connected to a positive electrode of a first operational amplifier C1, and an output end of the second sampling subcircuit 1042 is connected to a negative electrode of the first operational amplifier C1. An output end of the first operational amplifier C1 is connected to the control circuit 105.

The control circuit 105 is further connected to a control end of the second switch 107, and the control circuit 105 may be configured to control one input end of the second switch 107 to be connected to the output end of the second switch 107.

For example, when the control circuit 105 controls the input end p+, corresponding to the input interface 101A, to be connected to the output end r, and controls the input end p- to be connected to the output end s, the sampling circuit 104 may be configured to: sample, by using the second switch 107, the input voltage V_{A} received by the input interface 101A, and provide a voltage feedback signal for the control circuit 105 through the first power amplifier C1. In addition, the sampling circuit 104 is further configured to provide a function of isolation between the input interface 101A and the control circuit 105. The control circuit 105 may determine a voltage value of the input voltage V_{A} of the input interface 101A based on the voltage feedback signal.

For another example, when the control circuit 105 controls the input end q+, corresponding to the input interface 101B, to be connected to the output end r, and controls the input end q- to be connected to the output end s, the sampling circuit 104 may be configured to: sample, by using the second switch 107, the input voltage V_{B} received by the input interface 101B, and provide a voltage feedback signal for the control circuit 105 through the first power amplifier C1. In addition, the sampling circuit 104 is further configured to provide a function of isolation between the input interface 101B and the control circuit 105. The control circuit 105 may determine a voltage value of the input voltage V_{B} of the input interface 101B based on the voltage feedback signal.

It should be noted that in the example shown in FIG. 5, that the multi-input power supply circuit 10 has two input interfaces is used as an example. When the multi-input power supply circuit 10 has another quantity of input interfaces, the second switch 107 may be provided with another quantity of input ends, and the quantity of the input ends is twice the quantity of the input interfaces. The control circuit 105 may control an input end, corresponding to any input interface 101, of the second switch 107 to be connected to an output end. In this way, the sampling circuit 104 can provide a voltage feedback signal for the control circuit 105 based on an input voltage of the input interface 101. The control circuit 105 may determine a voltage value of the input voltage of the input interface 101 based on the received voltage feedback signal.

In an embodiment, the control circuit 105 may control all input ends of the second switch 107 to be sequentially connected to the output end. When each input end is connected to the output end, the sampling circuit 104 can provide a voltage feedback signal for the control circuit 105 based on an input voltage of an input interface connected to the input end. The control circuit 105 may sequentially receive a plurality of voltage feedback signals that correspond to input power supplies and that are received by using all the plurality of input interfaces, and the control circuit 105 may determine voltage values of the plurality of input voltages of the multi-input power supply circuit 10 based on the plurality of voltage feedback signals.

In conclusion, the multi-input power supply circuit 10 provided in this embodiment further includes a second switch. The control circuit 105 may control an input end, corresponding to an input interface, of the second switch 107 to be connected to an output end of the second switch 107. In this way, the sampling circuit 104 can provide, through the second switch 107, a voltage feedback signal for the control circuit 105 based on the input voltage of the input interface, and the control circuit 105 can determine a voltage value of the input voltage of the input interface based on the voltage feedback signal. If a voltage value of an input voltage of another input interface needs to be determined, the control circuit 105 may control an input end, corresponding to the another input interface, of the second switch 107 to be connected to the output end. Therefore, in the multi-input power supply circuit 10 provided in this embodiment, only two sampling subcircuits need to be disposed, and the sampling subcircuits are controlled, by using the second switch 107, to be connected to different input interfaces 101. Even if the multi-input power supply circuit 10 has more input interfaces 101, a quantity of resistors does not need to be increased, and only a quantity of input ends of the second switch 107 needs to be increased, thereby further reducing complexity of a structure of the multi-input power supply circuit 10 and further reducing costs of the multi-input power supply circuit 10.

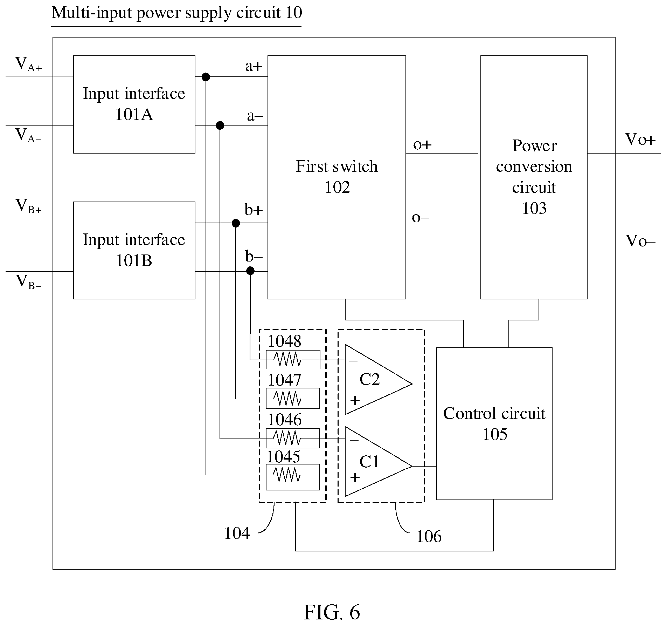

FIG. 6 is a diagram of a structure of a multi-input power supply circuit according to an embodiment of this application. The multi-input power supply circuit shown in FIG. 6 includes a plurality of input interfaces 101, a first switch 102, a second switch 107, a power conversion circuit 103, a sampling circuit 104, and a control circuit 105. Specific implementations of the plurality of input interfaces 101, the first switch 102, and the power conversion circuit 103 are the same as those shown in FIG. 4. Details are not described again.

The sampling circuit 104 shown in FIG. 5 includes a plurality of variable resistors. Input ends of the variable resistors are respectively connected to positive electrodes or negative electrodes of the plurality of input interfaces 101, and output ends of the variable resistors are separately connected to the control circuit 105 through an operational amplifier 106. A control end of the variable resistors is connected to the control circuit 105. The control circuit 105 may be configured to control resistance values of the plurality of variable resistors.

For example, in the embodiment shown in FIG. 6, the sampling circuit 104 includes four variable resistors. An input end of a first variable resistor 1045 is connected to a positive electrode V_{A}+ of an input interface 101A, and an output end of the first variable resistor 1045 is connected to a positive electrode of a first operational amplifier C1. An input end of a second variable resistor 1046 is connected to a negative electrode V_{A}- of the input interface 101A, and an output end of the second variable resistor 1046 is connected to a negative electrode of the first operational amplifier C1. An output end of the first operational amplifier C1 is connected to the control circuit 105. An input end of a third variable resistor 1047 is connected to a positive electrode V_{B}+ of an input interface 101B, and an output end of the third variable resistor 1047 is connected to a positive electrode of a first operational amplifier C2. An input end of a fourth variable resistor 1048 is connected to a negative electrode V_{B}- of the input interface 101B, and an output end of the fourth variable resistor 1048 is connected to a negative electrode of the second operational amplifier C2. An output end of the second operational amplifier C2 is connected to the control circuit 105.

A positive voltage V_{A}+ of the input end of the first variable resistor 1045 is divided and then a first voltage feedback signal is output to the first operational amplifier C1, and a negative voltage V_{A}- of the input end of the second variable resistor 1046 is divided and then a second voltage feedback signal is output to the first operational amplifier C1. The first operational amplifier C1 provides an amplified voltage feedback signal of the input voltage V_{A} for the control circuit 105 based on the first voltage feedback signal and the second voltage feedback signal. Similarly, the second operational amplifier C2 provides an amplified voltage feedback signal of the input voltage V_{B} for the control circuit 105.

The control circuit 105 may determine a voltage value of the input voltage V_{A} based on the received voltage feedback signal of the input voltage V_{A}, and determine a voltage value of the input voltage V_{B} based on the received voltage feedback signal of the input voltage V_{B}.

The control circuit 105 may further adjust a resistance value of each variable resistor. For example, when a voltage value of an input voltage of an input end of a variable resistor is large, the control circuit 105 may control the variable resistor to increase a resistance value; when a voltage value of an input voltage of an input end of a variable resistor is small, the control circuit 105 may control the variable resistor to reduce a resistance value; or the like. This ensures that voltage values of voltage feedback signals provided by output ends of the variable resistors can all meet a voltage range of a signal that can be processed by the control circuit 105, thereby ensuring stability of the control circuit 105.

In conclusion, in the multi-input power supply circuit 10 provided in this embodiment, the sampling circuit 104 provides, by using the plurality of variable resistors, voltage feedback signals for the control circuit 105 based on the input voltages of the input interfaces 101, and provides a function of isolation between the control circuit 105 and the input interfaces 101. The sampling circuit 104 provided in this embodiment also has both sampling and isolation functions. Compared with the sampling circuit 104 in which the isolator and the isolated power supply are disposed and that is of the multi-input power supply circuit 10 provided in the conventional technology, the sampling circuit 104 provided in this embodiment greatly reduces complexity of a circuit structure. Even if the multi-input power supply circuit 10 has more input interfaces 101, only a variable resistor needs to be added to the sampling circuit 104. In addition, resistance values of the variable resistors may be adjusted based on input voltages of input ends of the variable resistors, thereby improving flexibility of the multi-input power supply circuit 10. Therefore, the multi-input power supply circuit 10 can be used in more different scenarios such as a scenario of a variable input voltage, thereby enriching functions and application scenarios of the multi-input power supply circuit 10.

The following describes a process in which the control circuit 105 provided in this embodiment of this application can control the first switch 102 based on the voltage feedback signal. It may be understood that the control circuit 105 in the same multi-input power supply circuit may control the first switch 102 in one or more of the following manners.

In an embodiment, the control circuit 105 responds to a case in which a voltage value of an input voltage of a first input interface in the plurality of input interfaces 101 is within an operating voltage range required by the load 20, and then the control circuit 105 controls a first input end, corresponding to the first input interface, of the first switch 102 to be connected to an output end of the first switch 102. The multi-input power supply circuit 10 shown in FIG. 4 is used as an example. After determining the voltage value of the input voltage V_{A} and the voltage value of the input voltage V_{B} based on the voltage feedback signals, the control circuit 105 determines that the voltage value of the input voltage V_{A} is within the operating voltage range required by the load 20 and the voltage value of the input voltage V_{B} is not within the operating voltage range required by the load 20. This indicates that the multi-input power supply circuit 10 can provide, for the load 20 based on the input voltage V_{A}, an output voltage Vo that meets an operating requirement of the load 20. For the first switch 102, the control circuit 105 may control an input end a+ to be connected to an output end o+, and an input end a- to be connected to an output end o-, so that the power conversion circuit 103 receives the input voltage V_{A} through the first switch 102, performs voltage conversion on the input voltage V_{A}, and then provides the output voltage Vo for the load 20. In this embodiment, the control circuit 105 of the multi-input power supply circuit 10 can determine, from input voltages provided by a plurality of power supplies, an input voltage that is provided by a power supply that meets the operating requirement of the load 20, to supply power to the load, thereby ensuring stable operation of the load 20.

In an embodiment, the control circuit 105 responds to a case in which the voltage value of the input voltage of the first input interface in the plurality of input interfaces 101 is not within the operating voltage range required by the load 20, and the control circuit 105 controls a second input end, corresponding to a second input interface in the plurality of input interfaces 101, of the first switch 102 to be connected to the output end of the first switch 102. The multi-input power supply circuit 10 shown in FIG. 4 is used as an example. When the control circuit 105 determines that the voltage value of the input voltage V_{A} is not within the operating voltage range required by the load 20, it indicates that the multi-input power supply circuit 10 cannot provide, for the load 20 based on the input voltage V_{A}, the output voltage Vo that meets the operating requirement of the load 20. For the first switch 102, the control circuit 105 may control an input end b+ to be connected to the output end o+, and an input end b- to be connected to the output end o-. In this case, the power conversion circuit 103 may receive the input voltage V_{B} through the first switch 102, perform voltage conversion on the input voltage V_{B}, and then provide the output voltage Vo for the load 20. In this embodiment, when an input voltage provided by one power supply cannot drive the load 20 to operate normally, the control circuit 105 of the multi-input power supply circuit 10 can perform switching in time to an input voltage provided by another power supply, to supply power to the load 20, thereby ensuring continuous and stable operation of the load 20.

In an embodiment, the control circuit 105 responds to a case in which the voltage values of the input voltages of all the plurality of input interfaces in the plurality of input interfaces 101 are not within the operating voltage range required by the load 20, and the control circuit 105 controls the plurality of input ends of the first switch 102 to be all disconnected from the output end of the first switch 102. In this embodiment, when none of the input voltages provided by the plurality of power supplies can drive the load 20 to operate normally, the control circuit 105 of the multi-input power supply circuit 10 can control the first switch 102 to disconnect in time the input voltages provided by all the power supplies. This provides protection for the multi-input power supply circuit 10 and the subsequent load, thereby improving safety of the multi-input power supply circuit 10.

In an embodiment, the control circuit 105 responds to a case in which the voltage values of the input voltages of all the plurality of input interfaces 101 in the plurality of input interfaces 101 are not within the operating voltage range required by the load 20 and a sum of voltage values of a plurality of target input interfaces in the plurality of input interfaces 101 is within the required operating voltage range, and the control circuit 105 controls the input ends, corresponding to the plurality of target input interfaces, of the first switch 102 to be connected in series, and then connects the plurality of target input interfaces to the output end of the first switch 102 after the series connection. The multi-input power supply circuit 10 shown in FIG. 3 is used as an example. The control circuit 105 shown in FIG. 3 may determine the voltage value of the input voltage V_{A}, the voltage value of the input voltage V_{B}, ..., and the voltage value of the input voltage V_{N} based on the voltage feedback signals. When the control circuit 105 determines that none of the voltage value of the input voltage V_{A}, the voltage value of the input voltage V_{B}, ..., and the voltage value of the input voltage V_{N} is within the operating voltage range required by the load 20, it indicates that the multi-input power supply circuit 10 cannot provide, for the load 20 based on any path of separate input voltage, the output voltage Vo that meets the operating requirement of the load 20. In this case, if the control circuit 105 may determine that a sum V1+V2 of the voltage value V1 of the input voltage V_{A} and the voltage value V2 of the input voltage V_{B} is within the operating voltage range required by the load 20, the control circuit 105 controls the input end a and the input end b of the first switch 102 to be connected in series, to obtain an equivalent power supply between the input end a and the output end b. A voltage value that can be provided by the equivalent power supply is the sum V1+V2 of the voltage value V1 of the input voltage V_{A} and the voltage value V2 of the input voltage V_{B}. In addition, the control circuit 105 further controls an entirety obtained by connecting the input end a and the input end b of the first switch 102 in series, to be connected to the output end o of the first switch 102. In this way, the equivalent power supply between the input end a and the output end b of the first switch 102 provides an input voltage for the power conversion circuit 103 through the first switch 102, and a voltage value of the input voltage is V1+V2. The power conversion circuit 103 may perform voltage conversion on the input voltage, and then provide, for the load 20, the output voltage Vo that meets the operating requirement of the load 20. In this embodiment, when none of the input voltages provided by the plurality of power supplies can drive the load 20 to operate normally, the control circuit 105 of the multi-input power supply circuit 10 can further control input ends, corresponding to some target input interfaces, of the first switch 102 to be connected in series and then to be connected to the output interface of the first switch 102. In this way, the multi-input power supply circuit 10 can jointly supply power to the load 20 based on a sum of voltage values of input voltages provided by power supplies connected to the target input interfaces. This ensures continuous and normal operation of the load 20 when none of the input voltages provided by all power supplies is within the operating voltage range.

In the foregoing embodiments, the method performed by the control circuit 105 in the multi-input power supply circuit 10 provided in embodiments of this application are described. To implement functions in the method provided in the foregoing embodiments of this application, the control circuit 105 serving as an execution body may include a hardware structure and/or a software module, and implement the foregoing functions in a form of the hardware structure, the software module, or both the hardware structure and the software module. Whether a function in the foregoing functions is performed by using the hardware structure, the software module, or the combination of the hardware structure and the software module depends on particular applications and design constraints of the technical solutions. It should be noted and understood that division of modules of the foregoing apparatus is merely logic function division. During actual implementation, some or all of the modules may be integrated into one physical entity, or the modules may be physically separated. In addition, the modules may be all implemented in a form of software invoked by a processing element, or may be all implemented in a form of hardware. Alternatively, some modules may be implemented in a form of software invoked by a processing element, and some modules are implemented in a form of hardware. The modules may be separately disposed processing elements, or may be integrated into a chip of the foregoing apparatus for implementation. In addition, the modules may be stored in a memory of the foregoing apparatus in a form of program code, and are invoked by a processing element of the foregoing apparatus to perform functions of the determining module. Implementations of other modules are similar to the implementation of the modules. In addition, all or some of the modules may be integrated together, or may be implemented independently. The processing element herein may be an integrated circuit, and have a signal processing capability. In an implementation process, steps in the foregoing methods or the foregoing modules can be implemented by using a hardware integrated logic circuit in the processor element, or by using instructions in a form of software. For example, the foregoing modules may be configured as one or more integrated circuits for implementing the foregoing methods, for example, one or more application-specific integrated circuits (application-specific integrated circuit, ASIC), one or more digital signal processors (digital signal processor, DSP), or one or more field programmable gate arrays (field programmable gate array, FPGA). For another example, when one of the foregoing modules is implemented in a form of scheduling program code by a processing element, the processing element may be a general-purpose processor, such as a central processing unit (central processing unit, CPU) or another processor that can invoke the program code. For another example, the modules may be integrated together and implemented in a form of a system-on-a-chip (system-on-a-chip, SOC).

In the foregoing embodiments, all or some of the steps performed by the control circuit 105 may be implemented by using software, hardware, firmware, or any combination thereof. When software is used for the implementation, all or some of the steps may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

This application further provides a computer-readable storage medium. The computer-readable storage medium stores computer instructions. When the computer instructions are executed, any method performed by the control circuit 105 in the foregoing embodiments of this application may be performed.

An embodiment of this application further provides a chip for running instructions. The chip is configured to perform any of the foregoing methods performed by the control circuit 105 in this application.

An embodiment of this application further provides a computer program product. The program product includes a computer program. The computer program is stored in a storage medium. At least one processor may read the computer program from the storage medium. When executing the computer program, the at least one processor may implement any of the foregoing methods performed by the control circuit 105 in this application.

Persons of ordinary skill in the art may understand that all or a part of the steps in the foregoing embodiments may be implemented by hardware related to program instructions. The foregoing program may be stored in a computer-readable storage medium. When the program is executed, the steps of the method embodiments are performed. The foregoing storage medium includes any medium that can store program code, such as a ROM, a magnetic disk, or an optical disc.

Persons of ordinary skill in the art may understand that, to facilitate description of the technical solutions of this application, embodiments of this application are separately described by using functional modules. Circuit devices in the modules may partially or completely overlap. This is not intended to limit the protection scope of this application.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A multi-input power supply circuit, comprising:
a plurality of input interfaces, a first switch, a power conversion circuit, a sampling circuit, and a control circuit, wherein a plurality of input ends of the first switch are respectively connected to the plurality of input interfaces, an output end of the first switch is connected to an input end of the power conversion circuit, a plurality of input ends of the sampling circuit are respectively connected to the plurality of input interfaces, and an output end of the sampling circuit is connected to the control circuit; and
the sampling circuit comprises at least one resistor, the at least one resistor is configured to provide voltage feedback signals for the control circuit based on voltage values of input voltages of the plurality of input interfaces, and the control circuit is configured to control the first switch based on the voltage feedback signals.

2. The multi-input power supply circuit according to claim 1, wherein the sampling circuit comprises:
a plurality of sampling subcircuits, comprising a plurality of resistors connected in series, wherein an input end of the plurality of resistors is connected to a positive electrode and a negative electrode of the plurality of input interfaces, and an output end of the plurality of resistors is connected to the control circuit.

3. The multi-input power supply circuit according to claim 2, further comprising:
a plurality of operational amplifiers, wherein a positive input end and a negative input end of the operational amplifier are respectively connected to a positive electrode and a negative electrode of a same input interface through one of the sampling subcircuits, and the operational amplifier is configured to: amplify a voltage feedback signal provided by the sampling subcircuit, and provide an amplified voltage feedback signal for the control circuit.

4. The multi-input power supply circuit according to claim 1, further comprising:
a second switch, wherein a plurality of input ends of the second switch are respectively connected to the plurality of input interfaces, an output end of the second switch is connected to the sampling circuit, a control end of the second switch is connected to the control circuit, the control circuit is configured to control one input end of the second switch to be connected to the output end of the second switch, and the sampling circuit is configured to collect the voltage values of the input voltages of the input interfaces connected to the input ends.

5. The multi-input power supply circuit according to claim 1, wherein the sampling circuit comprises:
a plurality of variable resistors, wherein input ends of the plurality of variable resistors are respectively connected to positive electrodes and negative electrodes of the plurality of input interfaces, output ends of the plurality of variable resistors are separately connected to the control circuit, control ends of the plurality of variable resistors are separately connected to the control circuit, and the control circuit is configured to control resistance values of the plurality of variable resistors.

6. The multi-input power supply circuit according to any one of claims 1 to 5, wherein that the control circuit controls the first switch based on the voltage feedback signals comprises one or more of the following:
that the control circuit controls, based on the voltage feedback signals and in response to a case in which a voltage value of an input voltage of a first input interface is within an operating voltage range required by a load, a first input end, corresponding to the first input interface, of the first switch to be connected to the output end of the first switch;
that the control circuit controls, based on the voltage feedback signals and in response to a case in which the voltage value of the input voltage of the first input interface is not within the operating voltage range required by the load, a second input end, corresponding to a second input interface, of the first switch to be connected to the output end of the first switch;
that the control circuit controls, based on the voltage feedback signals and in response to a case in which the voltage values of the input voltages of the plurality of input interfaces are not within the operating voltage range required by the load, the plurality of input ends of the first switch to be all disconnected from the output end of the first switch; and
that the control circuit controls, based on the voltage feedback signals and in response to a case in which the voltage values of the input voltages of the plurality of input interfaces are not within the operating voltage range required by the load and a sum of voltage values of a plurality of target input interfaces in the plurality of input interfaces is within the operating voltage range required by the load, input ends, corresponding to the plurality of target input interfaces, of the first switch to be connected in series and then to be connected to the output end of the first switch.

7. The multi-input power supply circuit according to any one of claims 1 to 6, wherein the power conversion circuit comprises a power factor correction circuit and a direct current conversion circuit.

8. The multi-input power supply circuit according to claim 7, wherein
the control circuit is integrated into the power factor correction circuit, and the control circuit is further configured to control the power factor correction circuit; or the control circuit is integrated into the direct current conversion circuit, and the control circuit is further configured to control the direct current conversion circuit.

9. The multi-input power supply circuit according to any one of claims 1 to 8, wherein
the input voltage is alternating-current; or the input voltage is direct-current.

10. An electronic device, comprising a load and the multi-input power supply circuit according to any one of claims 1 to 9, wherein the multi-input power supply circuit is connected to a plurality of power supplies, and is configured to provide an output voltage for the load by using an input voltage provided by any one of the plurality of power supplies.
